# EUROPÄISCHE PATENTSCHRIFT

(11) **EP 0 943 505 B1**
(45) Veröffentlichungstag und Bekanntmachung des Hinweises auf die Patenterteilung: **28.01.2004**
(21) Anmeldenummer: 99104087.4
(22) Anmeldetag: 18.03.1999
(51) Int. Cl.: B60R 22/20

(54) **Verstellvorrichtung für einen Umlenkbeschlag**
Adjusting device for a guide fitting
Dispositif de réglage pour une ferrure de renvoi

(30) Priorität: 20.03.1998 DE 29805083 U
(43) Veröffentlichungstag der Anmeldung: 22.09.1999
(73) Patentinhaber: TRW Occupant Restraint Systems GmbH & Co. KG, 73553 Alfdorf (DE)
(72) Erfinder: Biller, Dieter, 73553 Alfdorf-Brech (DE)
(74) Vertreter: Sties, Jochen, Dipl.-Ing.

(56) Entgegenhaltungen:
- EP-A- 0 800 968
- DE-U- 29 606 521
- DE-U- 29 700 549

## Beschreibung

Die Erfindung betrifft eine Verstellvorrichtung für einen Umlenkbeschlag eines Fahrzeug-Sicherheitsgurtsystems, mit einer fahrzeugfesten Schiene, die einen mit Rastgestaltungen versehenen Boden sowie mindestens ein dem Boden gegenüberliegendes Vorderteil aufweist, einem in der Schiene verschiebbaren Schlitten, der für eine Anbringung des Umlenkbeschlages vorgesehen ist, einem manuell lösbaren Rastmechanismus, der mit den Rastgestaltungen zusammenwirken kann und den Schlitten in der Schiene arretieren kann, und einem vom Rastmechanismus funktional unabhängigen Sperrelement, das an dem Schlitten so gelagert ist, daß es aus einer Ruhestellung, in der es an der Schiene nicht angreift, -mittels einer auf den Schlitten in einer bestimmten Richtung einwirkenden Beschleunigung in eine Sperrstellung bewegbar ist, in der es an der Schiene angreift und den Schlitten gegen eine weitere Bewegung in der bestimmten Richtung festlegt.

Eine solche Verstellvorrichtung, wie sie aus dem deutschen Gebrauchsmuster 296 06 521 bekannt ist, dient dazu, den Verlauf des Sicherheitsgurtes optimal an die Größe des jeweiligen Fahrzeuginsassen anzupassen. Probleme bei der Verwendung einer solchen Verstellvorrichtung können auftreten, wenn sich der Rastmechanismus bei einem Unfall zwischen zwei als Rastöffnungen ausgebildeten Rastgestaltungen befindet, der Schlitten also nicht vorschriftsmäßig mittels des Rastmechanismus an einer Rastöffnung festgelegt ist. Dieses Problem wird noch verschärft, wenn das Sicherheitsgurtsystem mit einem Gurtstraffer versehen ist, der bei einem Unfall die Gurtlose aus dem Sicherheitsgurtsystem herauszieht. Die dabei auf den Umlenkbeschlag einwirkenden Kräfte können dazu führen, daß der Rastmechanismus nicht sicher in die nächstfolgende Rastöffnung eingreift und daher der Schlitten relativ zum Fahrzeug nach unten verlagert wird, wodurch die Wirkung des Gurtstraffers beeinträchtigt wird. Um zu verhindern, daß der Schlitten über die nächste Rastöffnung hinwegrutscht, ist an dem Schlitten ein von dem Rastmechanismus funktional unabhängiges, als Sperrklinke ausgebildetes Sperrelement so gelagert, daß es aus einer Ruhestellung, in der es an der Schiene nicht angreift, mittels einer auf den Schlitten einwirkenden, relativ zum Fahrzeug nach unten gerichteten Beschleunigung in eine Sperrstellung bewegbar ist, in der es an der Schiene angreift und den Schlitten festlegt. Die Sperrklinke blockiert den Schlitten nach einer Bewegung von wenigen Millimetern, so daß fast keine zusätzliche Gurtlose erzeugt wird, wenn der Rastmechanismus nicht vorschriftsmäßig in eine Rastöffnung eingreift.

Nachteilig bei dieser Verstellvorrichtung ist, daß ein hoher Aufwand hinsichtlich der Dimensionierung aller Bauteile notwendig ist, um sicher zu gewährleisten, daß die Sperrklinke den Schlitten unter den auftretenden hohen Belastungen sicher blockiert und nicht in der Schiene rutscht. Es muß nämlich sichergestellt werden, daß allein mittels der aus der Beschleunigung des Schlittens resultierenden Trägheitskräfte die Sperrklinke derart gegen die Schiene bewegt wird, daß sich die Angriffskante der Sperrklinke in die Schiene eingräbt.

Die Erfindung schafft eine Verstellvorrichtung, bei der der Schlitten mit größerer Sicherheit an der Schiene blockiert wird. Gemäß der Erfindung ist bei einer Verstellvorrichtung der eingangs genannten Art vorgesehen, daß daß jede Rastgestaltung mindestens einen hervorstehenden Rastzahn aufweist, daß das Sperrelement eine dem Boden zugewandte Anlagefläche, eine dem Vorderteil zugewandte Abstützfläche und einen Mittelbereich aufweist und daß, wenn sich das Sperrelement in der Sperrstellung befindet, sich die Anlagefläche in der bestimmten Richtung mindestens teilweise vor der Abstützfläche befindet und der Mittelbereich des Sperrelements an einem Rastzahn anliegen kann. Diese Gestaltung greift auf eine formschlüssige Blockierung des Sperrelements durch einen Rastzahn zurück, was gewährleistet, daß der Schlitten mit besonders großer Zuverlässigkeit in der Schiene blockiert wird; bei der oben genannten herkömmlichen Verstellvorrichtung ist dagegen im wesentlichen ein Kraftschluß zwischen dem Sperrelement und der Schiene erforderlich, um den Schlitten zu blockieren. Weiterhin stellt sich bei dieser Gestaltung ein besonders stabiles Gleichgewicht des Sperrelementes ein, das sich mit der Anlagefläche und der Abstützfläche, die in der bestimmten Richtung gegeneinander versetzt sind, in der Schiene verkeilt.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in der Zeichnung dargestellt ist. In dieser zeigen:
- Figur 1 eine schematische teilgeschnittene Seitenansicht einer Verstellvorrichtung;
- Figur 2 eine schematische teilgeschnittene Perspektivansicht einer Schiene und eines in dieser verschiebbaren Schlittens mit dem Sperrelement in der Ruhestellung;
- Figur 3 eine schematische Schnittansicht durch die Schiene und den Schlitten von Figur 2;
- Figur 4 eine schematische Schnittansicht einer Schiene und eines Schlittens mit dem Sperrelement in der Sperrstellung;
- Figur 5 eine schematische teilgeschnittene Perspektivansicht der Schiene und des Schlittens von Figur 4; und
- Figur 6 eine Schnittansicht durch die Schiene entlang der Ebene VI-VI von Figur 4.

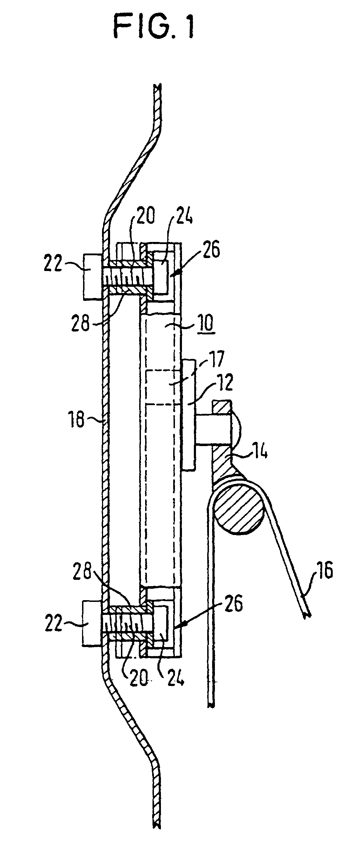

In Figur 1 ist ein erfindungsgemäßer Höhenversteller mit einer Schiene 10 dargestellt, in der verschiebbar ein Schlitten 12 angeordnet ist, an dem ein Umlenkbeschlag 14 für einen Fahrzeug-Sicherheitsgurt 16 angebracht ist. Der Schlitten 12 ist mit einem manuell betätigbaren Rastmechanismus 17 versehen, mittels dem der Schlitten in gewünschten Stellungen in der Schiene verriegelt werden kann. Die Schiene 10 ist an einem Karosserieteil 18 des Fahrzeugaufbaus befestigt, beispielsweise einer B-Säule eines Fahrzeugs. Die Schiene ist ein Hohlprofil, das an der vom Karosserieteil abgewandten Seite geöffnet ist, so daß ein Zugang zum Schlitten 12 möglich ist.

Für die Befestigung der Schiene 10 wird eine Befestigungsschraube 20 verwendet, die in ein Gegenstück 22 am Karosserieteil 18 eingeschraubt ist. Zwischen dem im Inneren der Schiene 10 liegenden Kopf 24 der Schraube 20 und dem Gegenstück 22 ist ein Distanzstück 26, 28 angeordnet.

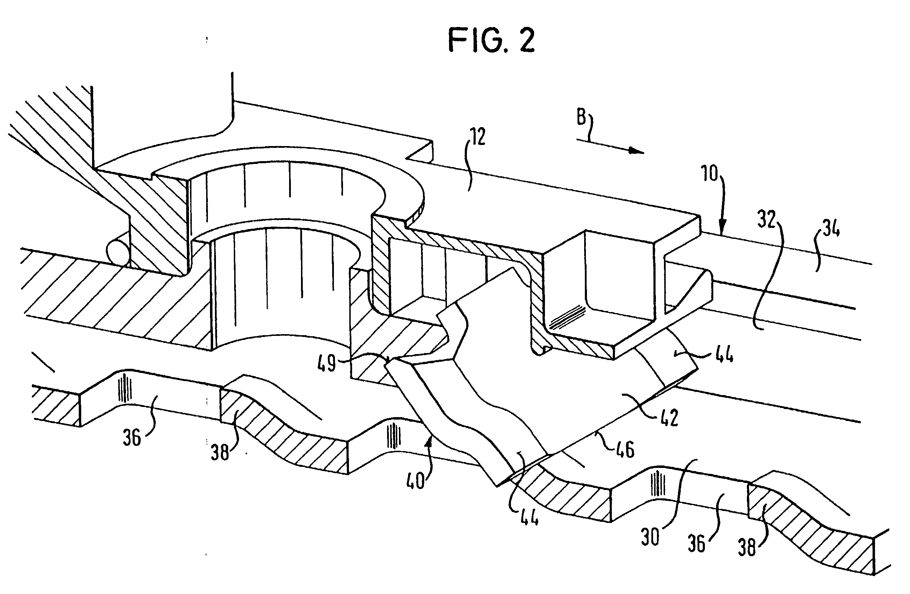

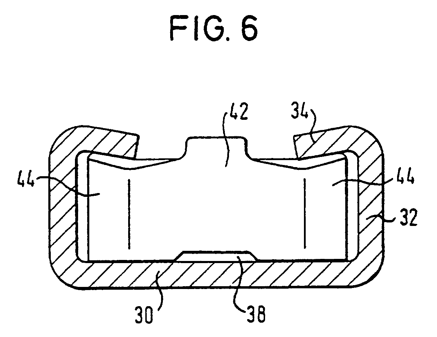

In Figur 2 sind die Schiene 10 und der Schlitten 12 im Detail zu sehen. Die Schiene 10 weist einen Boden 30, zwei Seiteteile 32 und zwei Vorderteile 34 auf, wobei von den Seitenteilen und den Vorderteilen nur jeweils eines zu sehen ist. Die beiden Vorderteile sind zum Inneren der Schiene hin geneigt (siehe Figur 6).

Im Boden 30 der Schiene sind Rastgestaltungen vorgesehen. Diese bestehen aus mehreren Rastöffnungen, die jeweils begrenzt werden durch einen Rand 36, und aus mehreren Rastzähnen 38, die jeweils im Bereich einer Rastöffnung ausgebildet sind. Die Rastzähne stehen in den Innenraum der Schiene 10 hervor, der umschlossen wird vom Boden, den Seitenteilen und den Vorderteilen. Der Rastmechanismus 17 kann mit einem in den Figuren nicht dargestellten Riegel in die Rastöffnungen eingreifen.

Am Schlitten 12 ist ein Sperrelement 40 angebracht. Das Sperrelement ist plattenförmig ausgestaltet und weist einen ebenen Mittelbereich 42 und beiderseits von diesem jeweils einen Abstützbereich 44 auf. Jeder Abstützbereich weist zwei gegeneinander versetzte Abschnitte auf, wobei sich die oberen, den Vorderteilen zugewandten Abschnitte etwa in derselben Ebene befinden wie der Mittelbereich und die unteren, dem Boden zugewandten Abschnitte relativ zur Richtung B (siehe Pfeil in Figur 2), in der der Schlitten in der Schiene bewegt wird, wenn vom Sicherheitsgurt 16 eine Kraft auf den Umlenkbeschlag 14 aufgebracht wird, sich vor der Ebene befinden, die vom Mittelbereich 42 definiert wird. Auf der dem Boden 30 zugewandten Seite weist das Sperrelement 40 eine ebene Anlagefläche 46 auf, die sich von einem der Abstützbereiche über den Mittelbereich bis hin zum anderen Abstützbereich erstreckt. Zwischen der Anlagefläche 46 und der entgegen der Richtung B ausgerichteten Seite des Sperrelements 40 ist eine Fase 48 vorgesehen. Jeder Abstützbereich ist auf seiner zur Anlagefläche 46 entgegengesetzten Seite mit einer Abstützfläche 49 versehen, die der Neigung der Vorderteile 34 der Schiene angepaßt ist. Der Abstand zwischen der Anlagefläche 46 und der Abstützfläche 49 des Sperrelements 40 ist so bemessen, daß das Sperrelement 40 mit geringem Spiel senkrecht zum Boden der Schiene in deren Inneren angeordnet werden kann.

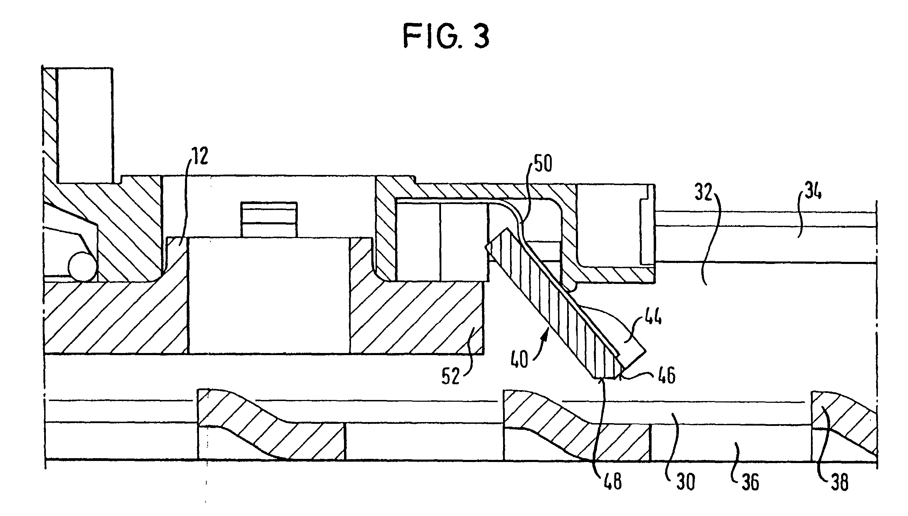

Das Sperrelement 40 ist mittels einer Blattfeder 50 (siehe Figur 3) bewegbar an dem Schlitten 12 so angebracht, daß es sich, wenn keine äußeren Kräfte einwirken, in der in den Figuren 2 und 3 gezeigten Ruhestellung befindet.

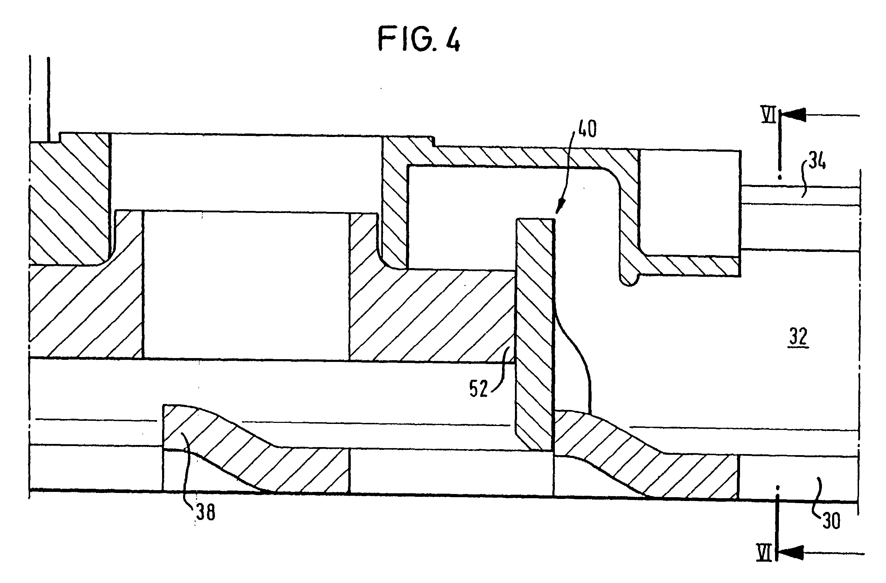

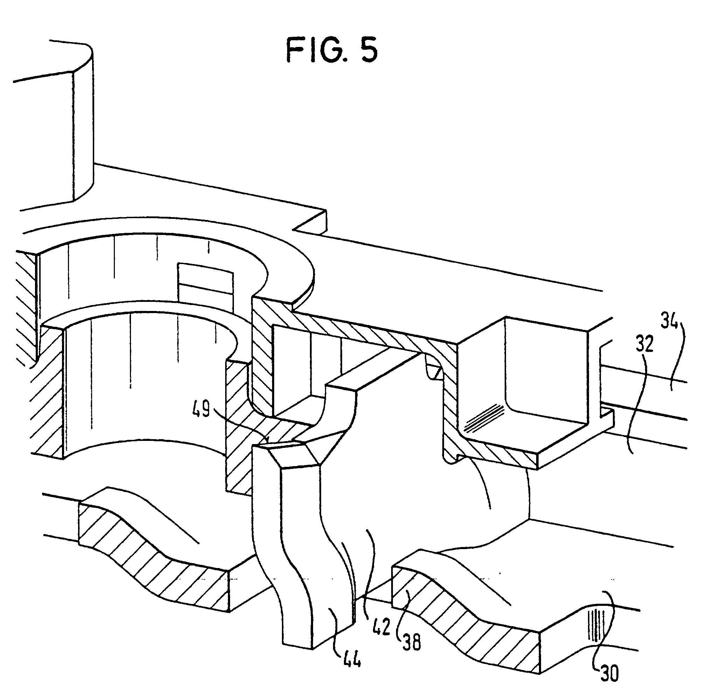

Wenn auf den Umlenkbeschlag eine Kraft in der Richtung des Pfeils B einwirkt, kann der Schlitten, falls er nicht vorschriftsmäßig in einer der Rastöffnungen verriegelt ist, in der Schiene nach unten verstellt werden. Aus dieser Bewegung nach unten resultiert eine auf das Sperrelement einwirkende Trägheitskraft, mittels der es entgegen der Wirkung der Blattfeder 50 aus der in den Figuren 2 und 3 gezeigten Ruhestellung in die in den Figuren 4, 5 und 6 gezeigte Sperrstellung verschwenkt wird, in der es sich etwa senkrecht zu einer vom Boden der Schiene definierten Ebene befindet.

In der Sperrstellung liegt die Anlagefläche 46 des Sperrelements 40 am Boden der Schiene 10 an. Der Mittelbereich 42 liegt mit seiner in der Richtung des Pfeils B ausgerichteten Seite an einem Rastzahn 38 an. Die Abstützflächen 49 liegen gegenüber den Innenseiten der Vorderteile oder an diesen an. In diesem Zustand wird das Sperrelement stabil gehalten, wobei es den Schlitten sicher und zuverlässig gegen eine Bewegung in der Richtung des Pfeils B blockiert. Es wird besonders darauf hingewiesen, daß der Aufwand zum Lagern des Sperrelements gering ist, obwohl große Lasten aufgenommen werden können. Das Sperrelement muß nämlich vom Schlitten nicht gegen eine Kippbewegung abgestützt werden; es ist ausreichend, eine ebene Haltefläche 52 vorzusehen, an der der Mittelbereich mit seiner entgegen der Richtung B ausgerichteten Seite anliegt.

Wenn von der Haltefläche 52 eine Kraft auf das Sperrelement 40 ausgeübt wird, wird das Sperrelemcnt mit seinem Mittelbereich 42 an einen Rastzahn 38 gedrückt. Daraus ergibt sich ein Kippmoment, das versucht, das Sperrelement 40 über die in der Richtung B vorne liegende Kante der Anlagefläche im Bereich der Abstützbereiche 44 zu kippen. Da die dem Boden zugewandten Abschnitte der Abstützbereiche gegenüber den den Vorderteilen zugewandten Abschnitten der Abstützbereiche in der bestimmten Richtung versetzt sind, würden die Abstützflächen 49 des Sperrelements bei dieser Kippbewegung vom Boden weg angehoben. Dies ist aber nicht möglich, weil die Abstützflächen 49 an der Innenseite der Vorderteile der Schiene anliegen. Das Sperrelement wird also stabil in seiner Sperrstellung gehalten. Da die Vorderteile 34 der Schiene nach innen geneigt sind, wird das Sperrelement auch bei hohen Lasten, wenn es zu einer geringfügigen Aufweitung der Schiene kommt, sicher an seinem Platz gehalten.

## Patentansprüche

1. Verstellvorrichtung für einen Umlenkbeschlag eines Fahrzeug-Sicherheitsgurtsystems, mit einer fahrzeugfesten Schiene (10), die einen mit Rastgestaltungen (36, 38) versehenen Boden (30) sowie mindestens ein sich gegenüber dem Boden erstreckendes Vorderteil (34) aufweist, einem in der Schiene (10) verschiebbaren Schlitten (12), der für eine Anbringung des Umlenkbeschlages (14) vorgesehen ist, einem manuell lösbaren Rastmechanismus (17), der mit den Rastgestaltungen zusammenwirken kann und den Schlitten in der Schiene arretieren kann, und einem vom Rastmechanismus funktional unabhängigen Sperrelement (40), das an dem Schlitten so gelagert ist, daß es aus einer Ruhestellung, in der es an der Schiene nicht angreift, mittels einer auf den Schlitten in einer bestimmten Richtung einwirkenden Beschleunigung in eine Sperrstellung bewegbar ist, in der es an der Schiene angreift und den Schlitten gegen eine weitere Bewegung in der bestimmten Richtung festlegt,
**dadurch gekennzeichnet, daß** jede Rastgcstaltung mindestens einen hervorstehenden Rastzahn (38) aufweist, daß das Sperrelement (40) eine dem Boden (30) zugewandte Anlagefläche 46), eine dem Vorderteil (34) zugewandte Abstützfläche (49) und einen Mittelbereich (42) aufweist und daß, wenn sich das Sperrelement (40) in der Sperrstellung befindet, sich die Anlagefläche (46) in der bestimmten Richtung mindestens teilweise vor der Abstützfläche (49) befindet und der Mittelbereich (42) des Sperrelements (40) an einem Rastzahn (38) anliegen kann.

2. Verstellvorrichtung nach Anspruch 1, **dadurch gekennzeichnet, daß** der Mittelbereich (42) des Sperrelements (40) eben ausgebildet ist und sich beiderseits des Mittelbereichs (42) jeweils ein Abstützbereich (44) befindet, wobei die Abstützfläche (49) an dem dem Vorderteil (34) zugewandten Ende des Abstützbereichs (44) und die Anlagefläche (46) zumindest teilweise an dem dem Boden (30) zugewandten Ende des Abstützbereichs (44) ausgebildet ist.

3. Verstellvorrichtung nach einem der vorhergehenden Ansprüche, **dadurch gekennzeichnet, daß** das Sperrelement (40) mittels einer Blattfeder (50) am Schlitten (12) gelagert ist.

## Claims

1. An adjustment device for a deflection fitting of a vehicle safety belt system, with a vehicle-fixed rail (10) which has a base (30) provided with detent means (36, 38) and at least one front part (34) extending opposite the base, with a sliding carriage (12) which is displaceable in the rail (10) and is provided for an attachment of the deflection fitting (14), with a manually releasable detent mechanism (17) which can cooperate with the detent means and can arrest the sliding carriage in the rail, and with a locking element (40) which is functionally independent of the detent mechanism and is mounted on the sliding carriage in such a manner that it is movable, by means of an acceleration acting on the sliding carriage in a specific direction, from a position of rest, in which it does not engage the rail, into a locking position, in which it engages the rail and fixes the sliding carriage against a further movement in the specific direction,
**characterized in that** each detent means has at least one projecting detent tooth (38), that the locking element (40) has a contact surface (46) facing the base (30), a support surface (49) facing the front part (34), and a central region (42), and that when the locking element (40) is in the locking position, the contact surface (46) is situated in the specific direction at least partially in front of the support surface (49) and the central region (42) of the locking element (40) can abut at a detent tooth (38).

2. The adjustment device according to claim 1, **characterized in that** the central region (42) of the locking element (40) is constructed flat and a support region (44) each is situated on either side of the central region (42), the support surface (49) being constructed at the end of the support region (44) facing the front part (34) and the contact surface (46) being constructed at least partially at the end of the support region (44) facing the base (30).

3. The adjustment device according to any of the preceding claims, **characterized in that** the locking element (40) is mounted on the sliding carriage (12) by means of a plate spring (50).

## Revendications

1. Dispositif de réglage pour une ferrure de renvoi d'un système de ceinture de sécurité d'un véhicule, comportant un rail (10) solidaire du véhicule, qui présente un fond (30) pourvu de structures d'enclenchement (36, 38) ainsi qu'au moins une partie antérieure (34) s'étendant à l'opposé du fond, un chariot (12) déplaçable sur le rail (10) et prévu pour un montage de la ferrure de renvoi (14), un mécanisme d'enclenchement (17) manuellement détachable, qui peut coopérer avec les structures d'enclenchement et arrêter le chariot dans le rail, et un élément de blocage (40) dont le fonctionnement est indépendant du mécanisme d'enclenchement et qui est monté sur le chariot de telle sorte qu'il peut être déplacé depuis une position de repos, dans laquelle il ne s'engage pas sur le rail, par une accélération agissant sur le chariot dans une direction déterminée, jusque dans une position de blocage dans laquelle il s'engage sur le rail et immobilise le chariot à l'encontre d'un autre mouvement dans la direction déterminée,
**caractérisé en ce que** chaque structure d'enclenchement présente au moins une dent d'enclenchement (38) faisant saillie, **en ce que** l'élément de blocage (40) présente une surface d'appui (46) tournée vers le fond (30), une surface de soutien (49) tournée vers la partie antérieure (34), et une région médiane (42), et **en ce que**, lorsque l'élément de blocage (40) se trouve dans la position de blocage, la surface d'appui (46) se trouve dans la direction déterminée au moins partiellement devant la surface de soutien (49) et la région médiane (42) de l'élément de blocage (40) peut prendre appui sur une dent d'enclenchement (38).

2. Dispositif de réglage selon la revendication 1, **caractérisé en ce que** la région médiane (42) de l'élément de blocage (40) est réalisée plane et de chaque côté de la région médiane (42) se trouve une région de soutien (44), la surface de soutien (49) étant réalisée à l'extrémité de la région de soutien (44), qui est tournée vers la partie antérieure (34), et la surface d'appui (46) étant réalisée au moins partiellement à l'extrémité de la région de soutien (44), qui est tournée vers le fond (30).

3. Dispositif de réglage selon l'une des revendications précédentes, **caractérisé en ce que** l'élément de blocage (40) est monté sur le chariot (12) au moyen d'un ressort à lames (50).
